# EUROPÄISCHE PATENTSCHRIFT

(11) **EP 4 341 589 B1**
(45) Veröffentlichungstag und Bekanntmachung des Hinweises auf die Patenterteilung: **19.11.2025**
(21) Anmeldenummer: 22729161.4
(22) Anmeldetag: 13.05.2022
(51) Int. Cl.: F04B 53/02, F16J 15/00, F16J 15/44, F16J 15/26, F04B 53/16

(54) **DICHTUNGSEINRICHTUNG FÜR EINE STANGE**
SEALING DEVICE FOR A ROD
DISPOSITIF D'ÉTANCHÉITÉ CONÇU POUR UNE TIGE

(30) Priorität: 17.05.2021 DE 102021112742
(43) Veröffentlichungstag der Anmeldung: 27.03.2024
(73) Patentinhaber: Hammelmann GmbH, 59302 Oelde (DE)
(72) Erfinder: HELMIG, Egbert, 59320 Ennigerloh (DE); STOFFERS, Christian, 33378 Rheda-Wiedenbrück (DE)
(74) Vertreter: Dantz, Jan Henning
(86) Internationale Anmeldenummer: PCT/EP2022/063052
(87) Internationale Veröffentlichungsnummer: WO 2022/243193

(56) Entgegenhaltungen:
- EP-B1- 1 353 096
- DE-A1- 102018 001 813
- DE-A1- 2 846 172
- GB-A- 1 407 874
- US-A- 4 840 548

## Beschreibung

Die vorliegende Erfindung betrifft eine Dichtungseinrichtung für eine Stange gemäß dem Oberbegriff des Anspruchs 1.

Eine gattungsgemäße Dichtungseinrichtung ist beispielsweise aus der EP 1 353 096 B1 bekannt.

In dieser Druckschrift wird zur Abdichtung einer sich bewegenden Stange im Übergangsbereich zwischen einem Hochdruckbereich und einem Niederdruckbereich eines die Stange führenden Führungsraums eines Gehäuses ein Dichtring eingesetzt, der die Stange umschließt, und der mithilfe eine Pressringes durch den im Hochdruckbereich anliegenden Hochdruck partiell verformt wird, so dass durch die Verformung des Dichtrings der Spalt zwischen Dichtring und Stange so weit verkleinert wird, dass dieser nur noch die gewünschte Leckagemenge an Fluid durchlässt.

Eine solche Spaltdichtungseinrichtung hat sich in der Praxis bewährt.

Problematisch ist, dass insbesondere bei sehr hohen Drücken im Hochdruckbereich von bis zu 3000 oder 4000 bar der an der Mantelaußenfläche des Dichtzylinders anliegende Betriebsdruck so groß ist, dass sich der Dichtzylinder mitunter bereits vor dem Pressring zu stark verformt, je nach E-Modul des Materials des Dichtzylinders.

Aufgabe der vorliegenden Erfindung ist es, eine Dichtungseinrichtung für Hochdruckeinrichtungen bereitzustellen, die unabhängig vom Material des Dichtzylinders eine dauerhafte Funktion gewährleistet.

Diese Aufgabe wird durch eine Dichtungseinrichtung mit den Merkmalen des Anspruchs 1 gelöst.

Die erfindungsgemäße Dichtungseinrichtung zur Abdichtung einer sich in einem mit einem flüssigen Medium gefüllten Hochdruckraum eines druckfesten Gehäuses translatorisch und/oder rotatorisch bewegbaren Stange zwischen dem Hochdruckraum und einem Niederdruckbereich weist einen Dichtzylinder auf, der in dem Gehäuse unter Ausbildung eines ersten Ringspaltes zwischen einer Mantelaußenfläche des Dichtzylinders und einer den Hochdruckraum begrenzenden Innenwand des Gehäuses aufnehmbar ist.

Ein Innendurchmesser einer Mantelinnenfläche des Dichtzylinders ist dabei so bemessen, dass die Stange unter Ausbildung eines eine dynamische Dichtung bildenden zweiten Ringspaltes von diesem umgreifbar ist.

Die Dichtungseinrichtung weist des Weiteren einen an der Mantelaußenfläche des Dichtzylinders nahe einer niederdruckseitigen Stirnfläche anliegenden Pressring zur statischen Abdichtung des ersten Ringspaltes und zur Verformung eines Teilstücks der Mantelinnenfläche des Dichtzylinders in Richtung der Stange auf.

Zur Ausbildung dieser Verformung ist im Niederdruckbereich am Gehäuse ein Druckring befestigbar, von dem ein Teilbereich der Stange aufnehmbar ist und der den Dichtzylinder unter Anpressen des Pressrings gegen einen stufenförmigen Ansatz des druckfesten Gehäuses in das Gehäuse, unter Ausbildung der Verformung des Teilstücks der Mantelinnenfläche des Dichtzylinders, eingedrückt halten kann.

An der Mantelaußenfläche des Dichtzylinders ist nahe der hochdruckseitigen Stirnfläche ein dynamisch mit Fluiddruck belasteter Dichtring zur statischen Abdichtung des ersten Ringspaltes aufliegend angeordnet. Weiter weist der Dichtzylinder wenigstens einen sich von seiner Mantelaußenfläche zu seiner Mantelinnenfläche erstreckenden Verbindungskanal auf.

Die Position des Verbindungskanals ist dabei an das Material des Dichtzylinders zur Verhinderung einer funktionseinschränkenden Verformung des Dichtzylinders in einem Bereich entfernt von dem Pressring angepasst.

Durch die Abdichtung des ersten Ringspaltes nahe der hochdruckseitigen Stirnfläche des Dichtzylinders und den im Dichtzylinder vorgesehenen Verbindungskanal, der die beiden Ringspalte fluidisch miteinander verbindet, ist es ermöglicht, je nach Positionierung des Verbindungskanals den an der Mantelaußenfläche des Dichtzylinders wirkenden Fluiddruck auf den Fluiddruck des zweiten Ringspaltes, der als Drosselspalt wirkt, in dem der vorherrschende Druck mit zunehmendem Abstand von der hochdruckseitigen Stirnfläche des Dichtzylinders abnimmt, auf den Druck einzustellen, der im Bereich des Verbindungskanals im zweiten Ringspalt vorherrscht. Dadurch lässt sich der an der Mantelaußenfläche des Dichtzylinders wirkende Druck durch Positionierung des Verbindungskanals im Dichtzylinder an das jeweilige Material des Dichtzylinders anpassen, so dass die gewünschte Verformung und Belastung des Dichtzylinders entsprechend seines E-Moduls anpassbar ist und nur noch im Bereich des Pressrings erfolgt.

Vorteilhafte Ausführungsvarianten der Erfindung sind Gegenstand der Unteransprüche.

Gemäß einer vorteilhaften Ausführungsvariante ist der Verbindungskanal in einem Bereich des Mantels des Dichtzylinders zwischen dem Pressring und dem Dichtring eingebracht, wobei der Verbindungskanal um wenigstens 10% der Distanz zwischen dem Pressring und dem Dichtring von dem Pressring oder dem Dichtring entfernt ist.

Die dadurch bewirkte Reduzierung des an der Mantelaußenfläche des Dichtzylinders anliegenden Drucks ermöglicht den Einsatz zahlreicher Materialien für den Dichtzylinder.

Zur sicheren Lagerung des Dichtrings ist gemäß einer bevorzugten Ausführungsvariante nahe der hochdruckseitigen Stirnfläche des Dichtzylinders eine Ringaufnahme in der Mantelaußenfläche des Dichtzylinders angeformt, in der der Dichtring aufgenommen ist.

In einer besonders bevorzugten Ausführungsvariante ist die Ringaufnahme als sich von der hochdruckseitigen Stirnfläche des Dichtzylinders in die Mantelaußenfläche des Dichtzylinders erstreckende Stufe ausgebildet.

Der Dichtring lässt sich so bei der Montage in äußerst einfacher Weise von der hochdruckseitigen Stirnfläche auf den Dichtzylinder aufstülpen.

Gemäß einer weiteren bevorzugten Ausführungsvariante der Erfindung ist die hochdruckseitige Stirnfläche des Dichtzylinders mit einer Ringkappe abgedeckt.

Ein Vorteil des Einsatzes einer solchen Ringkappe liegt vor allem darin, dass dadurch eine freie spannungsarme Ausgestaltung des Gehäuses mit Radien ermöglicht ist, unabhängig von einer sonst notwendigen radienlosen Stützfläche für die Abdichtung zum Hochdruckbereich.

Gemäß einer weiteren bevorzugten Ausführungsvariante weist der Dichtzylinder nahe der niederdruckseitigen Stirnfläche einen Kragen auf, an dessen der niederdruckseitigen Stirnfläche abgewandten Rückseite der Pressring anliegt.

Dies ermöglicht eine exakte Positionierung des Pressrings und auch des Dichtzylinders selbst, insbesondere in Richtung der Längsachse des Dichtzylinders.

Nach dem Einsetzen des Dichtzylinders in das druckfeste Gehäuse bewirkt das damit einhergehende Einquetschen des Pressrings zwischen dem Kragen und einer Stufe des druckfesten Gehäuses die gewünschte Verformung des Dichtzylinders in Richtung des zweiten Ringspalts.

Der Dichtzylinder ist bevorzugt aus einem Keramikwerkstoff, Hartmetall, Stahl, insbesondere Edelstahl, Bronze oder einem Kunststoff gefertigt.

Die erfindungsgemäße Anordnung einer translatorisch und/oder rotatorisch bewegbaren Stange in einem mit einem flüssigen Medium gefüllten Hochdruckraum eines druckfesten Gehäuses weist zur Abgrenzung des Hochdruckraums von einem Niederdruckbereich einen Dichtzylinder auf, der in dem Gehäuse unter Ausbildung eines ersten Ringspaltes zwischen einer Mantelaußenfläche des Dichtzylinders und einer den Hochdruckraum begrenzenden Innenwand des Gehäuses aufgenommen ist.

Ein Abschnitt der Stange ist unter Ausbildung eines eine dynamische Dichtung bildenden zweiten Ringspaltes in dem Dichtzylinder aufgenommen, wobei an der Mantelaußenfläche des Dichtzylinders nahe einer niederdruckseitigen Stirnfläche ein Pressring zur statischen Abdichtung des ersten Ringspaltes und zur Verformung eines Teilstücks der Mantelinnenfläche des Dichtzylinders in Richtung der Stange anliegt.

An der Mantelaußenfläche des Dichtzylinders ist nahe der hochdruckseitigen Stirnfläche ein Dichtring zur statischen Abdichtung des ersten Ringspaltes angeordnet.

Der Dichtzylinder weist wenigstens einen sich von seiner Mantelaußenfläche zu seiner Mantelinnenfläche erstreckenden Verbindungskanal auf, über den der erste Ringspalt mit dem zweiten Ringspalt miteinander fluidoffen verbunden ist.

Nachfolgend werden bevorzugte Ausführungsbeispiele anhand der beiliegenden Zeichnungen näher erläutert. Es zeigen:
- Figur 1: eine Schnittdarstellung durch eine Stange und ein diese umgebendes Gehäuse mit darin angeordnetem Dichtzylinder,
- Figur 2: eine Schnittdarstellung eines Ausschnitts der in Figur 1 dargestellten Anordnung mit schematischer Darstellung von an der Mantelaußenfläche und der Mantelinnenfläche des Dichtzylinders vorherrschenden Drücken im Druckhub der Anordnung und
- Figur 3: eine der Figur 2 entsprechende Darstellung im Saughub der Anordnung.

In der nachfolgenden Figurenbeschreibung beziehen sich Begriffe wie oben, unten, links, rechts, vorne, hinten usw. ausschließlich auf die in den jeweiligen Figuren gewählte beispielhafte Darstellung und Position der Dichtungseinrichtung, Gehäuse, Dichtzylinder, Stange, Ringspalt, Verbindungskanal und dergleichen. Diese Begriffe sind nicht einschränkend zu verstehen, d.h., durch verschiedene Arbeitsstellungen oder die spiegelsymmetrische Auslegung oder dergleichen können sich diese Bezüge ändern.

Im Folgenden wird unter einer statischen Dichtung eine fluidische Abdichtung zwischen zwei sich relativ nicht zueinander bewegenden Körpern verstanden.

Als dynamische Dichtung wird im Folgenden eine fluidische Abdichtung bzw. eine Reduzierung eines Flusses auf ein zulässiges Maß zwischen zwei sich relativ zueinander bewegenden Körpern verstanden.

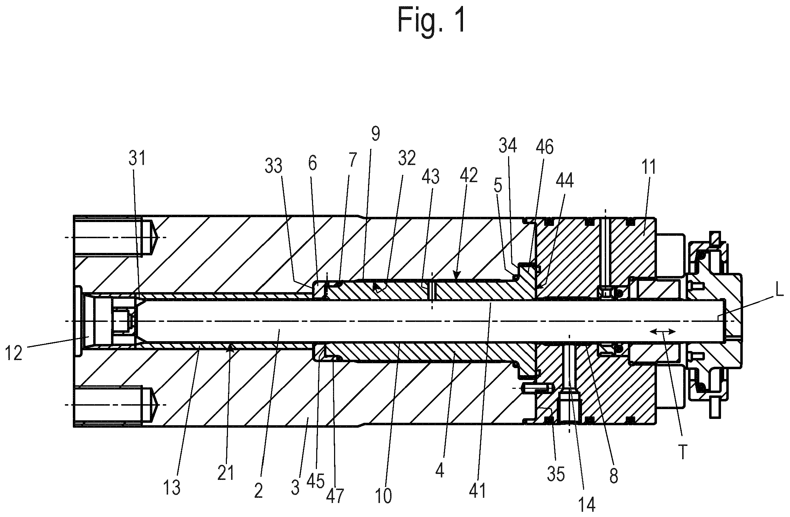

In den Figuren 1 bis 3 ist jeweils eine Dichtungseinrichtung für eine Stange 2 dargestellt, die sich zwischen einem Hochdruckraum 31 eines Gehäuses 3 und einem Niederdruckbereich 8 erstreckt. Die Stange 2 ist dabei translatorisch in Translationsrichtung T entlang ihrer Längsachse L bewegbar. Denkbar ist auch eine rotatorische Bewegung der Stange 11 um ihre Längsachse L.

Zumindest ein Teilstück der Stange 2 ist innerhalb des Gehäuses 3 bewegbar gelagert.

Zur Abgrenzung des Hochdruckraums 31 von dem beispielhaft im Bereich eines Druckrings 11 vorherrschenden Niederdruckbereich 8 ist ein Dichtzylinder 4 vorgesehen, der dem Gehäuse 3 unter Ausbildung eines ersten Ringspaltes 9 zwischen einer Mantelaußenfläche 42 des Dichtzylinders 4 und einer den Hochdruckraum 31 begrenzenden Innenwand 32 des Gehäuses 3 aufgenommen ist.

Der in den Figuren 1 bis 3 dargestellte Druckring 11 dient zum einen ebenfalls der Lagerung der Stange 2 und zum zweiten dem Eindrücken des Dichtzylinders 4 in das Gehäuse 3, mit dem der Druckring 11 fest verschraubt ist.

Die Stange 2 ist durch einen durch eine Mantelinnenfläche 41 des Dichtzylinders 4 begrenzten Durchlass des Dichtzylinders 4 durchgeführt. Der Durchmesser der Mantelinnenfläche 41 des Dichtzylinders 4 ist dabei geringfügig größer als der Durchmesser der Mantelaußenfläche 42 der Stange 2, so dass die Stange 2 zusammen mit dem Dichtzylinder 4 eine dynamische Dichtung, auch als Spaltdichtung bezeichnet, bilden. Eine solche Spaltdichtung zeichnet sich dadurch aus, dass am hochdruckseitigen Ende der Spaltdichtung der Hochdruck auch im Ringspalt 10 anliegt, sich aber in Richtung des niederdruckseitigen Endes des Ringspaltes 10 allmählich verringert.

Um eine auch in der eingangs erwähnten EP 1 353 096 B1 erwähnte Leckage, die sich durch den Einsatz eines solchen Drosselspaltes ergibt, möglichst klein zu halten, ist auch hier, wie in den Figuren 1 bis 3 zu erkennen ist, an der Mantelaußenfläche 42 des Dichtzylinders 4 nahe der niederdruckseitigen Stirnfläche 44 ein Pressring 5 vorgesehen, der der Verformung eines Teilstücks der Mantelinnenfläche 41 des Dichtzylinders 4 in Richtung der Stange 2 bewirkt, sobald der Druckring 11 an das Gehäuse 3 angeschraubt ist und dabei den Pressring 5 gegen einen stufenförmigen Ansatz des Gehäuses 3 presst. Durch die so in Richtung der Längsachse L der Stange 2 aufgebrachte Kraft wird der Pressring 5 deformiert und dabei von zwei Seiten her von dem druckfesten Gehäuse 3 ausdehnungsfest gehalten ist und von einer dritten Seite her, die sich senkrecht zur Kraftrichtung der Kraft F in axialer Richtung der Stange 2 erstreckt, durch den Dichtzylinder 4 selbst, wird durch den Pressring 5 eine im Wesentlichen radial zur Stange 2 gerichtete Kraft erzeugt, die die gewünschte Verformung der Mantelinnenfläche 41 des Dichtzylinders 4 in Richtung der Stange 2 bewirkt.

Der Pressring 5 dient darüber hinaus der statischen Abdichtung des ersten Ringspaltes 9 zwischen der Mantelaußenfläche 42 des Dichtzylinders 4 und der den Hochdruckraum 31 begrenzenden Innenwand 32 des Gehäuses 3.

Wie in den Figuren 1 bis 3 weiter gezeigt ist, ist an der Mantelaußenfläche 42 des Dichtzylinders 4 nahe der hochdruckseitigen Stirnfläche 45 ein Dichtring 7 zur statischen Abdichtung des ersten Ringspaltes 9 aufliegend angeordnet. Dieser Dichtring 7 verhindert somit eine Beaufschlagung des Ringspaltes 9 mit dem im Hochdruckraum 31 vorherrschenden Druck.

Weiter weist der Dichtzylinder 4 wenigstens einen sich von seiner Mantelaußenfläche 42 zu seiner Mantelinnenfläche 41 erstreckenden Verbindungskanal 43 auf, über die der erste Ringspalt 9 mit dem zweiten Ringspalt 10 miteinander fluidoffen verbunden sind.

Dies ermöglicht die Beaufschlagung des ersten Ringspaltes 9 mit dem Druck, wie er auf Höhe der Verbindungskanal 43 im als Drosselspalt ausgeführten zweiten Ringspalt 10 auf Höhe der Verbindungskanal 43 ansteht.

Dadurch wirkt nach wie vor auch auf die Mantelaußenfläche 42 des Dichtzylinders 4 ein vorbestimmter Druck als Ausgleich zu dem in dem zweiten Ringspalt 10 vorherrschenden Druck, der eine funktionseinschränkende Verformung des Dichtzylinders 4 im Bereich der Ringspalte 9, 10 verhindert oder zumindest stark reduziert. Als funktionseinschränkende Verformung wird dabei insbesondere eine Verformung des Dichtzylinders 4 in radialer Richtung hin zur Mantelfläche der Stange 2 verstanden, die zu einem Klemmen der Stange 2 führen könnte.

Durch die beidseitige Abdichtung des ersten Ringspaltes 9, bewirkt durch den Pressring 5 und den Dichtring 7 und die Verbindungskanal 43 im Dichtzylinder 4, wird so ein gegenüber aus dem Stand der Technik bekannten System verbessertes Druckgleichgewicht beidseits der Zylindermantelfläche des Dichtzylinders 4 geschaffen, was eine Vielzahl von Materialien für den Dichtzylinder 4 ermöglicht.

Der Verbindungskanal 43 ist bevorzugt in einem Bereich des Mantels des Dichtzylinders 4 zwischen dem Pressring 5 und dem Dichtring 7 eingebracht, wobei der Verbindungskanal 43 um wenigstens 10%, bevorzugt um wenigstens 25 % der Distanz zwischen dem Pressring 5 und dem Dichtring 7 von dem Pressring 5 oder dem Dichtring 7 entfernt ist. Die Positionierung des Verbindungskanals hängt dabei insbesondere von der Materialauswahl für den Dichtzylinder 4 ab.

Bei den in den Figuren 1 bis 3 gezeigten Ausführungsvarianten ist die Verbindungskanal 43 etwa mittig zwischen der niederdruckseitigen Stirnfläche 44 und der hochdruckseitigen Stirnfläche 45 eingebracht.

Denkbar sind auch mehrere Verbindungskanäle 43, die sich in der gleichen radialen Ebene des Dichtzylinders 4 erstrecken.

Der Dichtzylinder 4 ist bevorzugt aus einem Keramikwerkstoff, Hartmetall, Stahl, insbesondere Edelstahl, Bronze oder einem Kunststoff oder auch einem Mischwerkstoff aus einem oder mehreren der oben genannten Materialien gefertigt. Je nach Auswahl des Materials oder Materialgemisches bzw. E-Modul des Materials, aus dem der Dichtzylinder gefertigt ist, wird der Verbindungskanal so platziert, dass eine Verformung des Dichtzylinders 4 in einem Bereich entfernt von dem Pressring 5 verhindert wird.

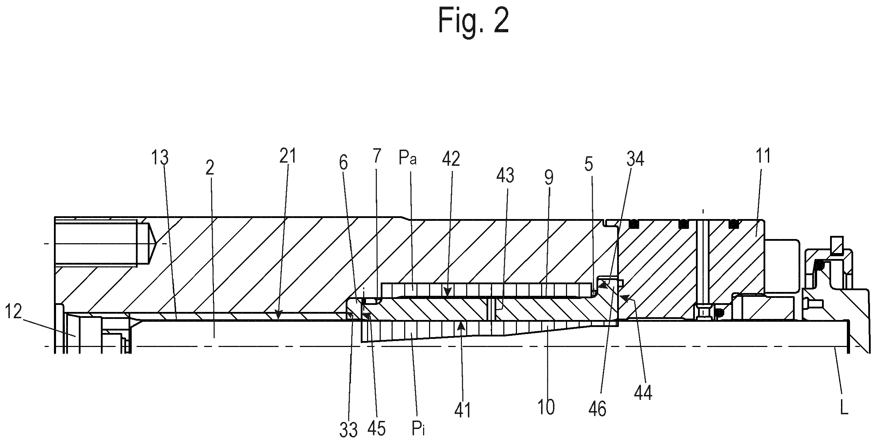

In Figur 2 ist beispielhaft der an den Mantelflächen des Dichtzylinders 4 anliegende Druck im Druckhub der Stange 2 schematisch dargestellt.

Wie bereits weiter oben ausgeführt, nimmt der auf die Mantelinnenfläche 41 des Dichtzylinders 4 wirkende Druck pᵢ in dem zweiten Ringspalt 10 von der Hochdruckseite zur Niederdruckseite hin ab.

Der an der Mantelaußenfläche 42 anliegende Druck pₐ ist durch die durch den Pressring 5 und den Dichtring 7 bewirkte Abdichtung des ersten Ringspalts 9 konstant und entspricht dem Druck an der Mantelinnenfläche 41 des Dichtzylinders 4 auf Höhe der Verbindungskanal 43.

Dies bewirkt, dass insbesondere nahe dem niederdruckseitigen Ende des ersten Ringspaltes 9 eine deutlich abgeschwächte Druckdifferenz gegenüber dem aus dem Stand der Technik bekannten System, bei dem auch im Bereich des niederdruckseitigen Endes des ersten Ringspaltes 9 noch der volle hochdruckseitige Druck anliegen würde.

Außerdem bewirkt der reduzierte, an der Mantelaußenfläche 42 anliegende Druck pₐ eine geringere Belastung des Pressrings 5.

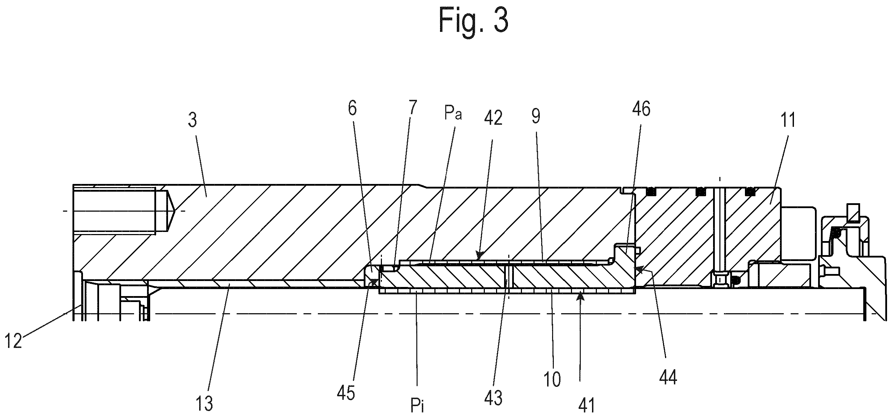

Figur 3 zeigt eine der Figur 2 entsprechende Darstellung der Anordnung während eines Saughubs der Stange 2, bei der der hochdruckseitige Druck deutlich geringer ist und dementsprechend der Druck pᵢ auf der Mantelinnenfläche 41 des Dichtzylinders 4 im zweiten Ringspalt 10 nahezu durchgängig konstant ist und entsprechend auch der an der Mantelaußenfläche 42 des Dichtzylinders 4 anliegende Druck pₐ entsprechend geringer ist.

Bei den in den Figuren 1 bis 3 gezeigten Ausführungsbeispielen ist die Stange 2 als Plunger eines Hochdrucksystems ausgebildet, wobei am hochdruckseitigen Ende der Stange 2 ein Ventilsitz 12, bevorzugt mit einem Saugventil und einem Druckventil, angeordnet ist.

Zur Führung der Stange 2 auf der Hochdruckseite jenseits des Dichtzylinders 4 ist bevorzugt eine Hülse 13 vorgesehen, die einer weiteren Reduzierung des mit flüssigem Medium gefüllten Hochdruckraums 31 dient. Zur Aufnahme des Dichtrings 7 ist, wie in den Figuren 1 bis 3 dargestellt, nahe der hochdruckseitigen Stirnfläche 45 des Dichtzylinders 4 eine Ringaufnahme 47 in der Mantelaußenfläche 42 des Dichtzylinders 4 angeformt.

Diese Ringaufnahme 47 ist hier bevorzugt als sich von der hochdruckseitigen Stirnfläche 45 des Dichtzylinders 4 in die Mantelaußenfläche 42 des Dichtzylinders 4 erstreckende Stufe ausgebildet.

Weiter ist die hochdruckseitige Stirnfläche 45 des Dichtzylinders 4 bevorzugt mit einer Ringkappe 6 abgedeckt.

### Bezugszeichenliste

- 2: Stange, Stange
- 21: Mantelfläche
- 22: Führungsraum
- 23: Hochdruckbereich

- 3: Gehäuse
- 31: Hochdruckraum
- 32: Innenwand
- 33: Stufe
- 34: Stufe
- 35: Niederdruck-Stirnseite

- 4: Dichtzylinder
- 41: Mantelinnenfläche
- 42: Mantelaußenfläche
- 43: Verbindungskanal
- 44: Stirnseite
- 45: Stirnseite
- 46: Kragen
- 47: Ringaufnahme

- 5: erster Pressring
- 6: Ringkappe
- 7: zweiter Pressring
- 8: Niederdruckbereich
- 9: erster Ringspalt
- 10: zweiter Ringspalt
- 11: Druckring
- 12: Hochdruckdüse
- 13: Hülse
- 14: Leckagekanal
- T: Translationsrichtung
- X: Richtung
- Y: Richtung
- Z: Richtung
- pᵢ: Druck im zweiten Ringspalt
- pₐ: Druck im ersten Ringspalt

## Patentansprüche

1. Dichtungseinrichtung zur Abdichtung einer sich in einem mit einem flüssigen Medium gefüllten Hochdruckraum (31) eines druckfesten Gehäuses (3) translatorisch und/oder rotatorisch bewegbaren Stange (2) zwischen dem Hochdruckraum (31) und einem Niederdruckbereich (8), aufweisend
- einen Dichtzylinder (4), der in dem Gehäuse (3) unter Ausbildung eines ersten Ringspaltes (9) zwischen einer Mantelaußenfläche (42) des Dichtzylinders (4) und einer den Hochdruckraum (31) begrenzenden Innenwand (32) des Gehäuses (3) aufnehmbar ist,
- wobei ein Innendurchmesser einer Mantelinnenfläche (41) des Dichtzylinders (4) so bemessen ist, dass die Stange (2) unter Ausbildung eines eine dynamische Dichtung bildenden zweiten Ringspaltes (10) von diesem umgreifbar ist,
- einen an der Mantelaußenfläche (42) des Dichtzylinders (4) nahe einer niederdruckseitigen Stirnfläche (44) anliegenden Pressring (5) zur statischen Abdichtung des ersten Ringspaltes (9) und zur Verformung eines Teilstücks der Mantelinnenfläche (41) des Dichtzylinders (4) in Richtung der Stange (2),
- einen im Niederdruckbereich (8) am Gehäuse (3) befestigbaren Druckring (11), von dem ein Teilbereich der Stange (2) aufnehmbar ist, der den Dichtzylinder (4) unter Anpressen des Pressrings (5) gegen einen stufenförmigen Ansatz des druckfesten Gehäuses (3) in das Gehäuse (3) unter Ausbildung der Verformung des Teilstücks der Mantelinnenfläche (41) des Dichtzylinders (4) eingedrückt halten kann,
**dadurch gekennzeichnet, dass**
- an der Mantelaußenfläche (42) des Dichtzylinders (4) nahe einer hochdruckseitigen Stirnfläche (45) ein Dichtring (7) zur statischen Abdichtung des ersten Ringspaltes (9) aufliegend angeordnet ist und
- der Dichtzylinder (4) wenigstens einen sich von seiner Mantelaußenfläche (42) zu seiner Mantelinnenfläche (41) erstreckenden Verbindungskanal (43) aufweist,
- wobei die Position ded Verbindungskanals (43) an das Material des Dichtzylinders (4) zur Verhinderung einer Verformung des Dichtzylinders (4) in einem Bereich entfernt von dem Pressring (5) angepasst ist.

2. Dichtungseinrichtung nach Anspruch 1, **dadurch gekennzeichnet, dass** der Verbindungskanal (43) in einem Bereich des Mantels des Dichtzylinders (4) zwischen dem Pressring (5) und dem Dichtring (7) eingebracht ist, wobei der Verbindungskanal (43) um wenigstens 10% der Distanz zwischen dem Pressring (5) und dem Dichtring (7) von dem Pressring (5) oder dem Dichtring (7) entfernt ist.

3. Dichtungseinrichtung nach Anspruch 2, **dadurch gekennzeichnet, dass** der Verbindungskanal (43) um wenigstens 25% der Distanz zwischen dem Pressring (5) und dem Dichtring (7) von dem Pressring (5) oder dem Dichtring (7) entfernt ist.

4. Dichtungseinrichtung nach einem der vorstehenden Ansprüche, **dadurch gekennzeichnet, dass** nahe der hochdruckseitigen Stirnfläche (45) des Dichtzylinders (4) eine Ringaufnahme (47) in der Mantelaußenfläche (42) des Dichtzylinders (4) angeformt ist, in der der Dichtring (7) aufgenommen ist.

5. Dichtungseinrichtung nach Anspruch 4, **dadurch gekennzeichnet, dass** die Ringaufnahme (47) als sich von der hochdruckseitigen Stirnfläche (45) des Dichtzylinders (4) in die Mantelaußenfläche (42) des Dichtzylinders (4) erstreckende Stufe ausgebildet ist.

6. Dichtungseinrichtung nach einem der vorstehenden Ansprüche, **dadurch gekennzeichnet, dass** die hochdruckseitige Stirnfläche (45) des Dichtzylinders (4) mit einer Ringkappe (6) abgedeckt ist.

7. Dichtungseinrichtung nach einem der vorstehenden Ansprüche, **dadurch gekennzeichnet, dass** der Dichtzylinder (4) nahe der niederdruckseitigen Stirnfläche (44) einen Kragen (46) aufweist, an dessen der niederdruckseitigen Stirnfläche (44) abgewandten Rückseite der Pressring (5) anliegt.

8. Dichtungseinrichtung nach einem der vorstehenden Ansprüche, **dadurch gekennzeichnet, dass** der Dichtzylinder (4) aus einem Keramikwerkstoff gefertigt ist.

9. Anordnung einer translatorisch und/oder rotatorisch bewegbaren Stange (2) in einem mit einem flüssigen Medium gefüllten Hochdruckraum (31) eines druckfesten Gehäuses (3), **gekennzeichnet durch** eine Dichtungseinrichtung gemäß einem der vorstehenden Ansprüche,
- wobei der Dichtzylinder (4) zwischen der Mantelaußenfläche (42) des Dichtzylinders (4) und der den Hochdruckraum (31) begrenzenden Innenwand (32) des Gehäuses (3) aufgenommen ist,
- wobei im Niederdruckbereich (8) am Gehäuse (3) der einen Teilbereich der Stange (2) aufnehmender Druckring (11) befestigt ist, der den Dichtzylinder (4) unter Anpressen des Pressrings (5) gegen einen stufenförmigen Ansatz des druckfesten Gehäuses (3) in das Gehäuse (3) eingedrückt hält,
- wobei die Verformung des Teilstücks der Mantelinnenfläche (41) des Dichtzylinders (4) in Richtung der Stange (2) durch Anpressen des Druckrings (11) an eine niederdruckseitige Stirnfläche des Gehäuses (3) und des Dichtzylinders (4) erfolgt,
- und wobei über den wenigstens einen Verbindungskanal (43) der erste Ringspalt (9) mit dem zweiten Ringspalt (10) fluidoffen verbunden ist.

## Claims

1. Sealing device for sealing a rod (2), which is translationally and/or rotationally movable in a high-pressure chamber (31) of a pressure-resistant housing (3) filled with a liquid medium, between the high-pressure chamber (31) and a low-pressure region (8), comprising
- a sealing cylinder (4) which can be accommodated in the housing (3) with the formation of a first annular gap (9) between a jacket outer surface (42) of the sealing cylinder (4) and an inner wall (32) of the housing (3) bounding the high-pressure space (31),
- wherein an inner diameter of a jacket inner surface (41) of the sealing cylinder (4) is dimensioned such that the rod (2) can be embraced by the latter while forming a second annular gap (10) forming a dynamic seal,
- a press ring (5) abutting the outer jacket surface (42) of the sealing cylinder (4) near a low-pressure-side end face (44) for statically sealing the first annular gap (9) and for deforming a portion of the inner jacket surface (41) of the sealing cylinder (4) in the direction of the rod (2),
- a pressure ring (11) attachable to the housing (3) in the low-pressure area (8), a section of the rod (2) being accommodatable therein, which can hold the sealing cylinder (4) impressed by pressing the press ring (5) against a stepped section of the pressure-resistant housing (3) into the housing (3), thereby causing the deformation of the portion of the inner surface (41) of the jacket (41),
**characterized in that**
- a sealing ring (7) for statically sealing the first annular gap (9) is arranged in contact with the outer surface (42) of the sealing cylinder (4) near a high-pressure end face (45), and
- the sealing cylinder (4) has at least one connecting channel (43) extending from its outer surface (42) to its inner surface (41),
- wherein the position of the connecting channel (43) is adapted to the material of the sealing cylinder (4) for preventing deformation of the sealing cylinder (4) in an area remote from the press ring (5).

2. Sealing device according to claim 1, **characterized in that** the connecting channel (43) is introduced in a region of the jacket of the sealing cylinder (4) between the press ring (5) and the sealing ring (7), the connecting channel (43) being spaced from the press ring (5) or the sealing ring (7) by at least 10% of the distance between the press ring (5) and the sealing ring (7).

3. Sealing device according to claim 2, **characterized in that** the connecting channel (43) is spaced from the press ring (5) or the seal ring (7) by at least 25% of the distance between the press ring (5) and the seal ring (7).

4. Sealing device according to one of the preceding claims, **characterized in that** close to the high-pressure-side end face (45) of the sealing cylinder (4), an annular receptacle (47) is integrally formed in the outer jacket surface (42) of the sealing cylinder (4), in which the sealing ring (7) is received.

5. Sealing device according to claim 4, **characterized in that** the ring receptacle (47) is designed as a step extending from the high-pressure-side end face (45) of the sealing cylinder (4) into the outer jacket surface (42) of the sealing cylinder (4).

6. Sealing device according to one of the preceding claims, **characterized in that** the high-pressure-side end face (45) of the sealing cylinder (4) is covered by a ring cap (6).

7. Sealing device according to one of the preceding claims, **characterized in that** the sealing cylinder (4) has a collar (46) near the low-pressure-side end face (44), against whose rear side facing away from the low-pressure-side end face (44) the press ring (5) bears.

8. Sealing device according to one of the preceding claims, **characterized in that** the sealing cylinder (4) is made of a ceramic material.

9. Arrangement of a translationally and/or rotationally movable rod (2) in a high-pressure chamber (31) of a pressure-resistant housing (3) filled with a liquid medium, **characterized by** a sealing device according to one of the preceding claims
- wherein the sealing cylinder (4) is accommodated between the circumferential outer surface (42) of the sealing cylinder (4) and the inner wall (32) of the housing (3) delimiting the high-pressure space (31),
- wherein in the low-pressure region (8) the pressure ring (11) receiving a partial region of the rod (2) is fastened to the housing (3) and holds the sealing cylinder (4) impressed by pressing the pressure ring (5) against a step-shaped projection of the pressure-resistant housing (3) into the housing (3),
- wherein the deformation of the portion of the inner surface (41) of the jacket of the sealing cylinder (4) in the direction of the rod (2) is effected by pressing the pressure ring (11) against a low-pressure-side end face of the housing (3) and the sealing cylinder (4),
- and wherein the first annular gap (9) is fluidly connected to the second annular gap (10) by the at least one connecting channel (43).

## Revendications

1. Dispositif d'étanchéité servant à rendre étanche une tige (2) déplaçable par translation et/ou rotation dans un espace haute pression (31), rempli d'un milieu liquide, d'un logement (3) résistant à la pression entre l'espace haute pression (31) et une zone basse pression (8), présentant
- un cylindre d'étanchéité (4) qui peut être reçu dans le logement (3) avec formation d'un premier interstice annulaire (9) entre une surface extérieure d'enveloppe (42) du cylindre d'étanchéité (4) et une paroi intérieure (32) du logement (3) délimitant l'espace haute pression (31),
- un diamètre intérieur d'une surface intérieure d'enveloppe (41) du cylindre d'étanchéité (4) étant dimensionné de telle manière que la tige (2), avec formation d'un deuxième interstice annulaire (10) formant une étanchéité dynamique, puisse être entourée par celui-ci,
- une bague de serrage (5), reposant contre la surface extérieure d'enveloppe (42) du cylindre d'étanchéité (4) à proximité d'une face frontale (44) côté basse pression, servant à rendre étanche de façon statique le premier interstice annulaire (9) et à déformer une portion de la surface intérieure d'enveloppe (41) du cylindre d'étanchéité (4) en direction de la tige (2),
- une bague de pression (11), pouvant être fixée dans la zone basse pression (8) sur le logement (3), par laquelle une zone partielle de la tige (2) peut être reçue, qui peut maintenir enfoncé dans le logement (3) le cylindre d'étanchéité (4), avec compression de la bague de serrage (5) contre un prolongement en forme de gradin du logement (3) résistant à la pression, avec formation de la déformation de la portion de la surface intérieure d'enveloppe (41) du cylindre d'étanchéité (4),
**caractérisé en ce que**
- une bague d'étanchéité (7) est disposée en reposant sur la surface extérieure d'enveloppe (42) du cylindre d'étanchéité (4) à proximité d'une face frontale (45) côté haute pression, pour rendre étanche de façon statique le premier interstice annulaire (9), et
- le cylindre d'étanchéité (4) présente au moins un canal de liaison (43) s'étendant de sa surface extérieure d'enveloppe (42) à sa surface intérieure d'enveloppe (41),
- la position du canal de liaison (43) étant adaptée au matériau du cylindre d'étanchéité (4) pour empêcher une déformation du cylindre d'étanchéité (4) dans une zone éloignée de la bague de serrage (5).

2. Dispositif d'étanchéité selon la revendication 1, **caractérisé en ce que** le canal de liaison (43) est mis en place dans une zone de l'enveloppe du cylindre d'étanchéité (4) entre la bague de serrage (5) et la bague d'étanchéité (7), le canal de liaison (43) étant éloigné de la bague de serrage (5) ou de la bague d'étanchéité (7) d'au moins 10% de la distance entre la bague de serrage (5) et la bague d'étanchéité (7).

3. Dispositif d'étanchéité selon la revendication 2, **caractérisé en ce que** le canal de liaison (43) est éloigné de la bague de serrage (5) ou de la bague d'étanchéité (7) d'au moins 25% de la distance entre la bague de serrage (5) et la bague d'étanchéité (7).

4. Dispositif d'étanchéité selon l'une des revendications précédentes, **caractérisé en ce que**, à proximité de la face frontale (45) côté haute pression du cylindre d'étanchéité (4), il est formé une réception annulaire (47) dans la surface extérieure d'enveloppe (42) du cylindre d'étanchéité (4) dans laquelle la bague d'étanchéité (7) est reçue.

5. Dispositif d'étanchéité selon la revendication 4, **caractérisé en ce que** la réception annulaire (47) est constituée comme un gradin s'étendant de la face frontale (45) côté haute pression du cylindre d'étanchéité (4) jusque dans la surface extérieure d'enveloppe (42) du cylindre d'étanchéité (4).

6. Dispositif d'étanchéité selon l'une des revendications précédentes, **caractérisé en ce que** la face frontale (45) côté haute pression du cylindre d'étanchéité (4) est recouverte d'un capuchon annulaire (6).

7. Dispositif d'étanchéité selon l'une des revendications précédentes, **caractérisé en ce que**, à proximité de la face frontale (44) côté basse pression, le cylindre d'étanchéité (4) présente une collerette (46), au côté arrière de laquelle qui est éloigné de la face frontale (44) côté basse pression la bague de serrage (5) est attenante.

8. Dispositif d'étanchéité selon l'une des revendications précédentes, **caractérisé en ce que** le cylindre d'étanchéité (4) est fabriqué en matériau céramique.

9. Disposition d'une tige (2) déplaçable par translation et/ou rotation dans un espace haute pression (31), rempli d'un milieu liquide, d'un logement (3) résistant à la pression, **caractérisée par** un dispositif d'étanchéité selon l'une des revendications précédentes,
- le cylindre d'étanchéité (4) étant reçu entre la surface extérieure d'enveloppe (42) du cylindre d'étanchéité (4) et la paroi intérieure (32) du logement (3) délimitant l'espace haute pression (31),
- dans la zone basse pression (8) sur le logement (3), il est fixé la bague de pression (11) recevant une zone partielle de la tige (2) qui maintient enfoncé dans le logement (3) le cylindre d'étanchéité (4) avec compression de la bague de serrage (5) contre un prolongement en forme de marche du logement (3) résistant à la pression,
- la déformation de la portion de la surface intérieure d'enveloppe (41) du cylindre d'étanchéité (4) en direction de la tige (2) s'effectuant par compression de la bague de pression (11) sur une surface frontale côté basse pression du logement (3) et du cylindre d'étanchéité (4),
- le premier interstice annulaire (9) étant raccordé, en étant ouvert au fluide, au deuxième interstice annulaire (10) par le biais de l'au moins un canal de liaison (43).
